(19) Europäisches Patentamt

**European Patent Office**

**Office européen des brevets**

(11) Veröffentlichungsnummer: **0 296 490 B1**

(12) **EUROPÄISCHE PATENTSCHRIFT**

(45) Veröffentlichungstag der Patentschrift: **02.01.92**

(21) Anmeldenummer: **88109635.8**

(22) Anmeldetag: **16.06.88**

(51) Int. Cl.⁵: **C08F 8/06**

(54) **Verfahren zur Oxidation von Polyethylen.**

(30) Priorität: **25.06.87 DE 3720952**

(43) Veröffentlichungstag der Anmeldung:
**28.12.88 Patentblatt 88/52**

(45) Bekanntmachung des Hinweises auf die
Patenterteilung:
**02.01.92 Patentblatt 92/01**

(84) Benannte Vertragsstaaten:
**AT BE DE FR GB NL**

(56) Entgegenhaltungen:
**GB-A- 951 308**
**US-A- 3 293 112**

(73) Patentinhaber: **BASF Aktiengesellschaft**
**Carl-Bosch-Strasse 38**
**W-6700 Ludwigshafen(DE)**

(72) Erfinder: **Schuster, Ludwig, Dr.**
**Weinheimer Strasse 44**
**W-6703 Limburgerhof(DE)**
Erfinder: **Hettche, Albert, Dr.**
**Kleiststrasse 12**
**W-6717 Hessheim(DE)**
Erfinder: **Liedy, Werner, Dr.**
**Schifferstadter Strasse 4**
**W-6701 Hochdorf-Assenheim(DE)**
Erfinder: **Weiss, Stefan, Dr.**
**Carl-Beck-Strasse 46**
**W-6903 Neckargemuend(DE)**
Erfinder: **Ehemann, Leo**
**Goennheimer Strasse 8**
**W-6701 Roedersheim-Gronau(DE)**

## Beschreibung

Die Erfindung betrifft ein Verfahren zur Herstellung von oxidierten Polyethylenen mit Säurezahlen von 10 bis 40 mg kOH/g durch Oxidation von feinteiligem Polyethylen hoher Dichte bei Temperaturen unterhalb des Erweichungspunkts des Polyethylens und oberhalb 100°C mit einem Oxidationsgas aus Luft und/oder Sauerstoff, wobei das dem Polyethylen pro Stunde zugeführte Oxidationsgas pro Kilogramm Polyethylen mindestens 100 mg Ozon enthält.

Bei derartigen Verfahren werden oxidierte Polyethylene erhalten, die als in Wasser emulgierbare Wachse für den Pflegebereich sowie als Gleitmittel bei der Extrusion von Polyvinylchlorid Verwendung finden.

Aus den US-Patenten 32 93 112 und 33 22 711 sowie dem GB-Patent 10 87 915 ist bekannt, daß man Polyethylene durch Einwirkung von freiem Sauerstoff oxidieren kann. Man erhält dabei oxidierte Produkte. Die Oxidation wird dabei im allgemeinen bei Temperaturen knapp unterhalb des Schmelzpunktes des Polyethylens durchgeführt, um einesteils eine möglichst hohe Reaktionsgeschwindigkeit zu erzielen, andererseits aber noch ein Anbacken oder Verklumpen des pulverigen Produktes zu vermeiden.

Bei diesen Verfahren wird zur Abkürzung der Induktionsperiode und zur Erhöhung der Oxidationsgeschwindigkeit ein Beschleuniger in geringen Mengen von z.B. 0,05 bis 5 Gew.%, bezogen auf das Polyethylen, verwendet. Als Beschleuniger werden organische Peroxide, Azobisisobutyronitril, Ozon oder Distickstofftetroxid vorgeschlagen. Die Peroxide sollten zweckmäßig in einem organischen Lösungsmittel gelöst und auf dem Polyethylen verteilt werden. Anschließend wird dann das Lösungsmittel vor der Oxidation abgedampft. Hierbei erzielt man eine gleichmäßige Verteilung des Peroxides im Polyethylen.

Es ist auch aus der Literatur bereits bekannt, Polyethylene hoher Dichte mit Luft in Gegenwart von Ozon zu oxidierten Polyethylenen umzusetzen (vgl. die GB-Patente 951 308, 997 135 und 1 087 914).

Als Oxidationsapparate werden aufgeführt: Luftumwälzöfen, Wirbelschichtapparaturen, heiße Fließbetten, Pressen zu einer Folie und Oxidieren in heißer Luft, ferner eine rotierende Glastrommel sowie die Oxidation in wäßriger Suspension mit Durchleiten von Luft unter Druck.

Allen diesen Systemen sind jedoch gravierende Nachteile zueigen. So muß man beispielsweise vor der Oxidation in einer Wirbelschicht, das Gleiche gilt auch für Wirbelfließanlagen, Luftumwälzöfen und die Folienoxidation, das zu oxidierende Polyethylen mit dem Starter in einem eigenen System präparieren. Bei den übrigen Oxidationsreaktoren muß das Peroxid ebenfalls gelöst und auf dem Polyethylen verteilt werden, welches dann wiederum durch Abdestillieren des Lösungsmittels getrocknet werden muß.

Im Vergleich zu Peroxiden wirkt Ozon, dem Oxidationsgas beigemischt, als sehr guter Beschleuniger. Die bekannten Verfahren weisen aber noch den Nachteil auf, daß entweder in Suspensionen verschiedener Medien oder in der Schmelze gearbeitet wird, daß die Reaktionszeiten zu lange sind oder daß die entstandenen Produkte nicht den speziellen Anforderungen genügen.

Aufgabe der vorliegenden Erfindung war es, die obenerwähnten Nachteile zu vermeiden und ein Verfahren aufzufinden, bei dem die Oxidationsgeschwindigkeit besonders stark beschleunigt wird und ein Verkleben des Oxidationsproduktes leicht beherrschbar ist.

Diese Aufgabe wurde durch das eingangs beschriebene Verfahren zur Oxidation von Polyethylen mit einem Ozon enthaltenden Oxidationsgas gelöst, wobei das Oxidationsgas erfindungsgemäß in einem Schaufeltrockner durchgeführt wird und das Oxidationsgas in den freien Gasraum über dem Polyethylen eingeleitet wird. Ein bevorzugtes erfindungsgemäßes Verfahren besteht darin, daß man die Temperatur im Schaufeltrockner kontinuierlich ein bis zwei °C unterhalb des Erweichungspunkts des Polyethylens einstellt.

Die erhaltenen oxidierten Polyethylene weisen Säurezahlen von 10 bis 40, bevorzugt 10 bis 30 mg kOH/g auf. Die Säurezahlen werden durch Titration in siedendem Xylol mit methanolischer oder butanolischer KOH gegen Phenolphthalein erhalten, wobei 1 g oxidiertes Polyethylen in 100 bis 200 g Xylol gelöst sind und die KOH-Lösung 1/10 normal ist. Die erhaltenen Oxidate stellen helle temperaturbeständige Wachse mit einem Schmelzbereich von 120 bis 130°C und Schmelzindices, gemessen nach ASTM-D-1238-65 (190°C/2,16 kg) im Bereich von 0,1 bis 7000 g/10 min, dar.

Bei der Oxidation wird ein feinteiliges Polyethylen hoher Dichte eingesetzt. Unter feinteiligem Polyethylen ist hierbei ein körniges, pulvriges oder granulatförmiges Polyethylen mit Teilchengrößen im Bereich von 3 bis 1000, bevorzugt, 300 bis 800 Mikrometer zu verstehen. Das Polyethylen weist eine Dichte von oberhalb 0,935 g/cm$^3$, insbesondere von 0,94 bis 0,97 g/cm$^3$ (nach DIN 53 479) auf. Der Erweichungsbereich des eingesetzten Polyethylens liegt oberhalb von 125°C, insbesondere zwischen 127 und 140°C.

Das Polyethylen hoher Dichte kann z.B. nach Ziegler-Polymerisationsverfahren oder unter Verwendung von Phillips-Katalysatorsystemen aus Ethylen erhalten worden sein. Geeignete Polyethylene hoher Dichte weisen beispielsweise einen Schmelz-

2

indexwert von unter 0,01 g/10 min - gemessen nach ASTM-D-1238-65T bei einer Temperatur von 190°C und einem Auflagegewicht von 2,16 kg - auf.

Die Oxidationstemperaturen liegen unterhalb des Erweichungspunkts des jeweiligen Polyethylens hoher Dichte und oberhalb von 100°C, bevorzugt oberhalb von 120°C, insbesondere 1 bis 2°C unterhalb des jeweiligen Erweichungspunkts des Polyethylens.

Das Oxidationsgas besteht aus Luft und/oder Sauerstoff, wobei das pro Stunde dem Polyethylen zugeführte Oxidationsgas pro Kilogramm Polyethylen mindestens 100 mg, bevorzugt 150 bis 500 mg, Ozon enthält. Die Konzentration von Ozon in dem Oxidationsgas ist gemäß Stand der Technik nicht sehr wesentlich, da das Ozon weitgehend wegreagiert. Übliche Werte schwanken zwischen 2 und 6 g/m³.

Nach erfindungsgemäßem Verfahren wird nur dann ein brauchbares Oxidationsprodukt erhalten, wenn man eine bestimmte Begasungsart wählt, die sich in einem Schaufeltrockner realisieren läßt.

Erfindungsgemäß benutzt man als Oxidationsreaktor einen sogenannten Schaufeltrockner. Darunter versteht man einen von außen beheizbaren, liegenden Zylinder, in dessen Längsachse eine Welle angebracht ist, die nach außen gerichtete Schaufeln oder Paddel hat. Derartige Schaufeltrockner sind bekannt und beispielsweise beschrieben in den Publikationen Ullmanns Encyklopädie der technischen Chemie, Verlag Chemie, Weinheim/Bergstr., 4. Auflage (1972). Band 2, Seite 714; Kirk-Othmer, Encyclopedia of Chemical Technology, Interscience Publishers New York, 2nd Edition (1965), Vol. 7, Seiten 370 bis 371 oder in der Publikation "Grundriß der Technischen Chemie" von F.A. Henglein, Verlag Chemie Weinheim/Bergstr., 11. Auflage (1963) Seiten 114 bis 115.

Durch langsame Rotation um die Längsachse der Welle wird das zu oxidierende Gut im Reaktionsraum umgewälzt und durchmischt. Die Drehbewegung kann ausschließlich in einer Drehrichtung, aber auch abwechselnd im Uhrzeigersinn und im Gegensinn erfolgen.

Ein derartiger Trockner wird zu 60 bis 70 % seines Füllvolumens mit trockenem Polyethylenpulver gefüllt und unter Umwälzen auf die Oxidationstemperatur, z.B. 128°C, erhitzt. Erfindungsgemäß wird nun ein Luftstrom, der eine geringe Menge Ozon enthält, in den freien Gasraum über dem Polymeren eingeleitet. Diese Art der Gaseinbringung ist ganz wesentlich, um ein Produkt zu erhalten, das sich bei der Weiterverarbeitung völlig in wäßriger Natronlauge unter Druck emulgieren läßt. Führt man nämlich den ozonhaltigen Luftstrom, wie man es üblicherweise ausführen würde, an der tiefsten Stelle des Apparates ein, damit das Gas eine möglichst dicke Schicht durchströmen muß, so ist das so entstehende Polyethylenoxidat nur unvollständig emulgierbar. Die so hergestellte Emulsion ist grobdispers und nicht beständig; sie rahmt nach kurzer Zeit gelb und feinteilig auf.

Nachdem der größte Teil der vorgeschlagenen Oxidationsinitiatoren nur unbefriedigende Ergebnisse liefert - sei es, daß die Oxidationsgeschwindigkeit zu gering ist, sei es daß die entstehenden Produkte qualitativ nicht den geforderten Standard erreichen - war es überraschend und nicht zu erwarten, daß eine an sich nicht empfehlenswerte Maßnahme, wie das bloße Überleiten eines Gases mit einer geringen Menge eines reaktionsfähigen anderen Gases, ein Produkt mit den erwünschten Eigenschaften bei noch dazu verkürzter Reaktionsdauer liefert.

Ein weiterer Vorteil des Schaufeltrockners für diese Reaktion besteht darin, wie neu gefunden wurde, daß man das Verkleben des Oxidationsproduktes, wie es bei zu hoher Temperatur eintritt, sehr leicht beherrschen kann. In dem GB-Patent 1 087 915 ist beschrieben, wie man die Oxidation des festen Polyethylen, die am schnellsten in der Nähe des Schmelzpunktes abläuft, durchführen kann, ohne daß Verklebung und Verklumpung erfolgen. Hierbei wird die Temperatur nach einem festen Zeit-Temperatur-Programm abgesenkt, beispielsweise um 1 - 1,5°C pro 2 - 2,5 Stunden. Es ist leicht ersichtlich, daß man die Temperatur mit einem solchen starren Programm, selbst wenn es für jeden Polyethylentyp, jedes Peroxid und jede Gasbelastung ausgearbeitet würde, praktisch niemals im optimalen Bereich, d.h. 1 bis 2°C unterhalb des Erweichungspunktes, auf längere Zeit halten kann. Der Schaufeltrockner bietet hierzu die Möglichkeit: Durch einfache Messung der aufgenommenen Motorleistung kann man die Temperatur so steuern, daß man stets 1 bis 2°C unterhalb des Erweichungspunktes oxidiert. Es zeigte sich nämlich, daß in der Nähe dieses Erweichungspunktes der Stromverbrauch des Motors, der die Umwälzung besorgt, steil ansteigt. Man hat so einen empfindlichen Indikator für den beginnenden Verklumpungsprozeß, ehe dieser optisch wahrzunehmen ist. Dieser Effekt ist als Steuergröße für eine Temperaturregelung sehr geeignet.

Beispiel

In einem Schaufeltrockner von 160 Liter (l) Inhalt werden 44 kg eines Polyethylens der Dichte 0,946 g/cm³ in Pulverform (Korngröße 3 - 800 Mikrometer) erhitzt. Die Drehzahl der Rührwelle liegt bei 30 - 40 U/min. Hierbei wird eine Manteltemperatur von 130°C angelegt. Gleichzeitig werden 6,8 m³/Std. Luft und 1 m³/Std. Sauerstoff an der Stirnseite oben in den freien Raum über dem umgewälzten Polyethylenpulver geleitet. Dieser Gasstrom enthält 3,6 g/m$^3$ Ozon. Die Temperatur des zu oxidierenden Produktes wird durch die Messung der Motorleistung des Rührmotors so gesteuert, daß man 1 bis 2°C unterhalb des Erweichungspunktes arbeitet. Dieser sinkt von 128°C auf 122°C während der Oxidation ab. Nach 16 Stunden ist eine Säurezahl von 21 erreicht.

Zur Prüfung auf Emulgierbarkeit wird das Oxidat in einem Autoklaven nach folgendem Rezept emulgiert:

In einem 1-l-Autoklaven mit Rührung und Heizung werden vorgelegt (Gewichtsteile):

150 Teile Wasser
160 Teile oxidiertes Polyethylen
3,5 Teile Kaliumhydroxid
1,2 Teile Natriumbisulfit
42 Teile Emulgator (oxethyliertes Alkylphenol)

Es wird unter Rühren auf 150°C bis 160°C aufgeheizt und dann weitere 230 Teile Wasser zugegeben. Nach dem Abkühlen erhält man helle, transparente, stippenfreie Polyethylen-Sole.

Vergleichsversuch

Beispiel 1 wird wiederholt, jedoch mit dem alleinigen Unterschied, daß das Gas nicht in den freien Raum oberhalb des Polyethylenbettes eingeleitet wird, sondern an der Stirnseite unten, also an der tiefsten Stelle eingeblasen wird, also das Oxidationsgas durch die gerührte Schicht streichen muß. Man erhält in der gleichen Zeit ein Produkt mit der entsprechenden Säurezahl von 21.

Bei der Prüfung auf dessen Emulgierbarkeit zeigt sich dann, daß hierbei kein transparentes Sol erhalten wird, sondern eine milchige Emulsion, die gelb und feinteilig schon nach kurzer Zeit aufrahmt.

**Patentansprüche**

1. Verfahren zur Herstellung von oxidierten Polyethylenen mit Säurezahlen von 10 bis 40 mg kOH/g durch Oxidation von feinteiligem Polyethylen hoher Dichte bei Temperaturen unterhalb des Erweichungspunkts des Polyethylens und oberhalb 100°C mit einem Oxidationsgas aus Luft und/oder Sauerstoff, wobei das dem Polyethylen pro Stunde zugeführte Oxidationsgas pro Kilogramm Polyethylen mindestens 100 mg Ozon enthält, dadurch gekennzeichnet, daß man die Oxidation in einem Schaufeltrockner durchführt und das Oxidationsgas in den freien Gasraum über dem Polyethylen eingeleitet wird.

2. Verfahren nach Anspruch 1, dadurch gekennzeichnet, daß man die Temperatur im Schaufeltrockner kontinuierlich auf 1 bis 2°C unterhalb des Erweichungspunkts des Polyethylens einstellt.

3. Verwendung der nach Verfahren gemäß Ansprüchen 1 und 2 erhaltenen oxidierten Polyethylenen als in Wasser emulgierbare Wachse für den Pflegebereich.

4. Verwendung der nach Verfahren gemäß Ansprüchen 1 und 2 erhaltenen oxidierten Polyethylene als Gleitmittel bei der Extrusion von Polyvinylchlorid.

**Claims**

1. A process for preparing an oxidised polyethylene having an acid number of from 10 to 40 mg of KOH/g by oxidising a finely divided polyethylene of high density at below the softening point of the polyethylene and above 100°C with an oxidation gas of air and/or oxygen, the oxidation gas supplied per hour for contact with the polyethylene containing not less than 100 mg of ozone per kilogram of polyethylene, which comprises performing the oxidation in a paddle dryer and passing the oxidation gas into the free gas space above the polyethylene.

2. A process as claimed in claim 1, wherein the temperature in the paddle dryer is continuously adjusted to from 1 to 2°C below the softening point of the polyethylene.

3. Use of the oxidised polyethylene obtained by the process as claimed in either of claims 1 and 2, as a water-emulsifiable wax for polish.

4. Use of the oxidised polyethylene obtained by the process as claimed in either of claims 1 and 2, as lubricant in the extrusion of polyvinyl chloride.

**Revendications**

1. Procédé de préparation de polyéthylènes oxydés ayant des indices d'acide de 10 à 40 mg KOH/g, par oxydation de polyéthyléne haute densité finement divisé à des températures inférieures au point de ramollissement du polyéthylène et supérieures à 100°C, avec un gaz oxydant composé d'air et/ou d'oxygène, le gaz oxydant fourni par heure au polyéthylène contenant, par kilogramme de polyéthyléne, au moins 100 mg d'ozone, caractérisé en ce qu'on effectue l'oxydation dans un séchoir à hélice et en ce qu'on envoie le gaz oxydant sur le polyéthylène dans le volume libre du séchoir.

2. Procédé selon la revendication 1, caractérisé en ce qu'on règle la température dans le séchoir à hélice de sorte qu'elle soit en permanence à 1-2°C au-dessous du point de ramollissement du polyéthylène.

3. Utilisation des polyéthylènes oxydés obtenus selon la revendication 1 ou 2 comme cires émulsionnables dans l'eau pour le secteur des produits d'entretien.

4. Utilisation des polyéthylènes oxydés obtenus selon la revendication 1 ou 2 comme lubrifiants dans l'extrusion de chlorure de polyvinyle.